# EUROPEAN PATENT APPLICATION

(11) **EP 4 496 215 A1**
(43) Date of publication of application: **22.01.2025**
(21) Application number: 22932132.8
(22) Date of filing: 17.03.2022
(51) Int. Cl.: H02S 30/20

(54) **EXPANDABLE SOLAR CELL PADDLE**

(71) Applicant: MITSUBISHI ELECTRIC CORPORATION, Chiyoda-ku Tokyo 100-8310 (JP)
(72) Inventor: AKAZAWA, Kei, Tokyo 100-8310 (JP); ARAKI, Ryoichi, Tokyo 100-8310 (JP); KAWAMURA, Shunichi, Tokyo 100-8310 (JP); KAWASHIMA, Satoshi, Tokyo 100-8310 (JP)
(74) Representative: Hoffmann Eitle
(86) International application number: PCT/JP2022/012396
(87) International publication number: WO 2023/175858

(57) **Abstract**

A deployable solar array (1) is mounted on a rocket in a stowed position and deployed in space. The deployable solar array (1) includes a plurality of frame body units (10). Each frame body unit (10) includes a frame body (20) and a film (30). The frame body (20) defines a frame shape. The film (30) is attached to the frame body (20). The film (30) appears as a mounting surface in an opening that is formed by the frame shape defined by the frame body (20), with a plurality of solar cells (40) mounted on the mounting surface. According to the deployable solar array (1), effects that are advantageous for low cost, space saving, and mass productivity are obtained, compared to the widely used conventional rigid panel type solar arrays.

## Description

### Technical Field

The present disclosure relates to deployable solar arrays.

### Background Art

For solar array as reduce power generation for artificial satellites or space systems, features such as low cost, mass productivity, stowability are required.

Conventional rigid type solar arrays are limited in attaining these features.

Accordingly, companies are expanding their developments and applications of various flexible types for achieving high stowability with the intention of carrying multiple satellites on a rocket, which is directly linked to cost.

While approaches to flexible type solar arrays can be subdivided to different types, they can be generally classified into rollout type and flat pack type. Each has the features shown below.

### <Rollout type>

A long, flexible sheet with solar cells mounted thereon is stowed by being rolled around a mandrel of a rolling mechanism installed on a satellite body structure.

The solar cell sheet is rolled out and deployed by a flexible storable tubular extendible member or mast made of carbon fiber sheet.

Rigidity during deployment is ensured by the storable tubular extendible member or mast.

Deployment power is provided by the elastic energy of the storable tubular extendible member or mast or by an actuator mounted at the root.

Since the light receiving surfaces of the cells do not face each other due to the sheet rolling configuration, measures against interference between cells are easy compared to the flat pack type. The rollout type is suited for larger sizes, as it can cover ultra-large classes (classes with a power generation of 25 kW or more).

The larger the size, the smaller the proportion of the cost and mass of a deployment mechanism and a support mechanism relative to power scale; thus, there are advantages in cost and mass.

On the other hand, it is poor in scalability because a mandrel for rolling up the solar cell sheet is essential and it poses limitations on the height during stowage and the volume during stowage and also the deployment mechanism is relatively complicated.

### <Flat pack type>

Flexible sheets or thin plates with solar cells mounted thereon are connected to each other in a strip form and stowed like a folding screen. Some are deployed by springs mounted on deployment shafts and others are deployed by a storable tubular extendible member or a mast like the rollout type. To increase the size, rigidity during deployment poses a challenge. Thus, almost all of the large-sized flat pack types that presently exist in the world have storable tubular extendible members or masts. As the flat pack type does not require a mandrel for rolling up a sheet, it can be small in height during stowage and in volume during stowage.

A configuration that requires no storable tubular extendible member or mast is advantageous in scalability and hence in cost and mass productivity. On the other hand, it is disadvantageous for ultra-large classes, such as those covered by the rollout type, in terms of cost and mass.

### Citation List

### Patent Literature

Patent Literature 1: US 2018/0309008
Patent Literature 2: US 10189582

### Non-Patent Literature

Non-Patent Literature 1:: Bao Hoang; Steve White; Brian Spence; Steven Kiefer, "Commercialization of Deployable Space Systems' roll-out solar array (ROSA) technology for Space Systems Loral (SSL) solar arrays" Aerospace Conference, 30 June 2016.

### Summary of Invention

### Technical Problem

Patent Literature 1 is a publication on a large-sized, flat pack type solar array. The large-sized, flat pack type solar array of Patent Literature 1 uses storable tubular extendible member actuator extension.

Patent Literature 2 is a patent publication of a storable tubular extendible member -free, small-sized, rollout type solar array.

Non-Patent Literature 1 is a paper on a large-sized, rollout type solar array.

The large-sized, rollout type solar array according to the paper is of a self-extension storable tubular extendible member type.

As mentioned above, a storable tubular extendible member is required in order to increase the size of a solar array (Patent Literature 1, Non-Patent Literature 1). Since a mechanism to develop the storable tubular extendible member, whether an actuator or self-development, is complicated, a storable tubular extendible member is poor in scalability and has challenges in mass productivity and cost. Storable tubular extendible member-less configurations are limited to small-sized solar arrays because they cannot ensure rigidity during deployment (Patent Literature 2).

When a rolling mandrel is employed, the mandrel poses limitations on the height and volume during stowage, thus having a challenge of stowage ratio (Patent Literature 1, Non-Patent Literature 1).

An object of the present disclosure is to provide a solar array of flat pack type that does not require a storable tubular extendible member and a mast, allows for larger sizes, has good stowability, and is simple in structure and suited for mass production.

### Solution to Problem

A deployable solar array according to the present disclosure includes a plurality of frame body units.

Each frame body unit of the plurality of frame body units includes
a frame body defining a frame shape, and
a film that is attached to the frame body and appears as a mounting surface in an opening that is formed by the frame shape defined by the frame body, with a plurality of solar cells mounted on the mounting surface.

### Advantageous Effects of Invention

According to the present disclosure, a solar array of flat pack type that does not require a storable tubular extendible member and a mast, allows for larger sizes, has good stowability, and is simple in structure and suited for mass production can be provided.

### Brief Description of Drawings

Fig. 1 is a diagram of Embodiment 1, showing a perspective view of a deployable solar array 1 when deployed.
Fig. 2 is a diagram of Embodiment 1, showing how the deployable solar array 1 is folded.
Fig. 3 is a diagram of Embodiment 1, schematically showing a structure of a frame body 20.
Fig. 4 is a diagram of Embodiment 1, showing a film 30 attached to the frame body 20.
Fig. 5 is a diagram of Embodiment 1, showing the deployable solar array 1 when stowed.
Fig. 6 is a diagram of Embodiment 1, showing a D-D section in Fig. 5.
Fig. 7 is a diagram of Embodiment 1, showing a frame body unit 10, where solar cells 40 are not illustrated.
Fig. 8 is a diagram of Embodiment 1, showing three types of thermal deformation absorption structures 60 in an E-E section.
Fig. 9 is a diagram of Embodiment 1, showing a projection 24 in the D-D section.
Fig. 10 is a diagram of Embodiment 1, showing a mechanical contact 25.
Fig. 11 is a diagram of Embodiment 1, showing output lines 44 for drawing electric power from frame body units 10.
Fig. 12 is a diagram of Embodiment 1, showing an elastic body 80 that produces deployment power for the deployable solar array 1.
Fig. 13 is a diagram of Embodiment 1, showing an F-F section in which a deployment delay mechanism 90 appears.
Fig. 14 is a diagram of Embodiment 1, showing deployment of the deployable solar array 1 by the deployment delay mechanism 90.

### Description of Embodiments

In the description of an embodiment and the drawings, the same elements and corresponding elements are given the same reference characters. Description on elements with the same reference characters are omitted or simplified as appropriate.

### Embodiment 1.

### ***Description of structure***

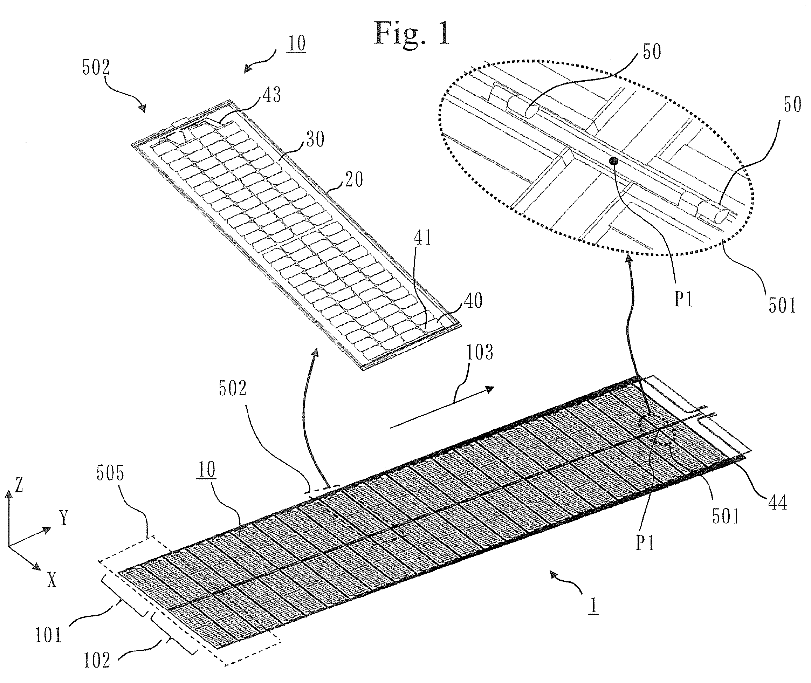

A deployable solar array 1 in Embodiment 1 will be described with reference to Figs. 1 to 14.

### <1. Basic configuration>

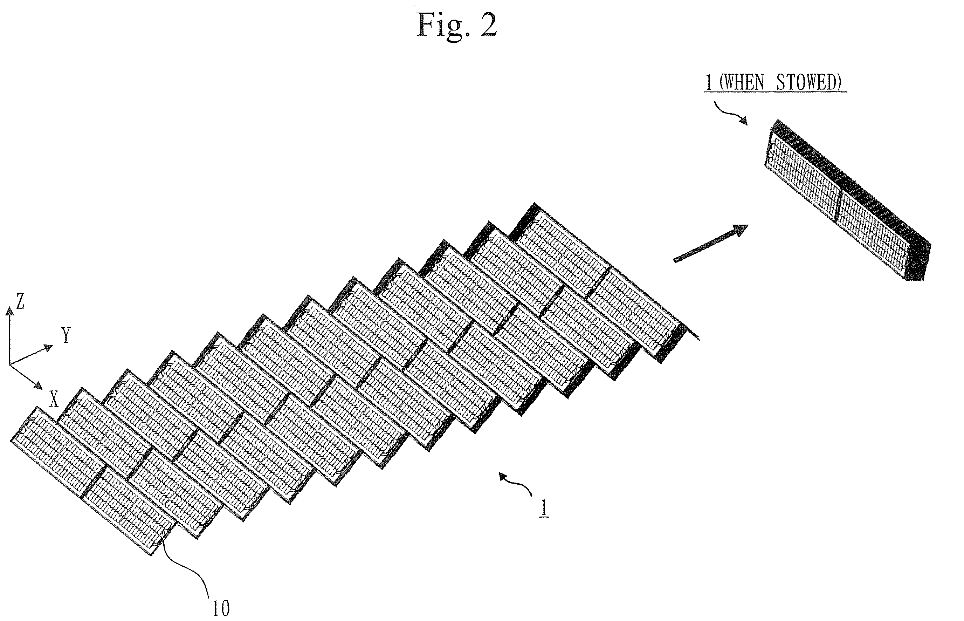

Referring to Figs. 1 and 2, a basic configuration of the deployable solar array 1 is described.

Fig. 1 shows a perspective view of the deployable solar array 1 when deployed. Fig. 2 shows how the deployable solar array 1 is folded. The deployable solar array 1 of Fig. 1 converts sunlight energy into electric power and supplies the converted electric power to a satellite or a space system.

The deployable solar array 1 includes multiple frame body units 10. As shown in Fig. 1, the multiple frame body units 10 align in a linear form upon deployment. Fig. 1 indicates X, Y, and Z coordinates. For drawings with the coordinates indicated therein, the coordinates correspond to each other. The deployable solar array 1 of Fig. 1 is formed of two rows: a first row 101 and a second row 102, in which the multiple frame body units 10 are arrayed in a straight line direction 103. The X, Y, and Z coordinates are such that when the deployable solar array 1 is deployed, an X-Y plane is a plane that is formed by multiple light receiving surfaces, which are discussed later, and Y-axis direction is the straight line direction 103. Z axis is one of the normal directions to the X-Y plane.

The first row 101 is formed of 23 frame body units 10. The second row 102 is also formed of 23 frame body units 10. Although the deployable solar array 1 is formed of two rows: the first row 101 and the second row 102, the deployable solar array 1 may be formed of one row or be formed of three or more rows. Although the first row 101 and the second row 102 are each formed of 23 frame body units 10 in the illustrated example, the number of frame body units 10 that form a row is not limited.

The two frame body units 10 that neighbor each other in the straight line direction 103 during deployment may be called one frame body unit 10 and the other frame body unit 10, respectively. Fig. 1 shows an enlarged view of an area 501 of the deployable solar array 1 and an enlarged view of an area 502. The enlarged view of the area 501 illustrates hinge coupling of one frame body unit 10 and the other frame body unit 10. The enlarged view of the area 502 shows a frame body unit 10 with multiple solar cells 40 arranged thereon. As shown in the enlarged view of the area 501, in the first row 101, one frame body unit 10 is coupled by a hinge 50 to the other frame body unit 10 that neighbors it during deployment.

This applies to the second row 102 as well.

As shown in Fig. 2, one frame body unit 10 overlies the other frame body unit 10 so as to cover the other frame body unit 10 by turning around the hinge 50. The multiple frame body units 10 can be stowed in layers by the one frame body unit 10 covering the other frame body unit 10. The deployable solar array 1 is folded such that the positions of the hinges 50 alternate between a peak and a valley across the multiple frame body units 10, until the frame body units 10 are stacked in layers. Here, the orientation of the peak is in the Z-axis direction and the orientation of the valley is in the opposite direction of the Z-axis direction.

The frame body unit 10 is now described. As shown in Fig. 1, each frame body unit 10 of the multiple frame body units 10 includes a frame body 20 and a film 30.

### <Frame body 20>

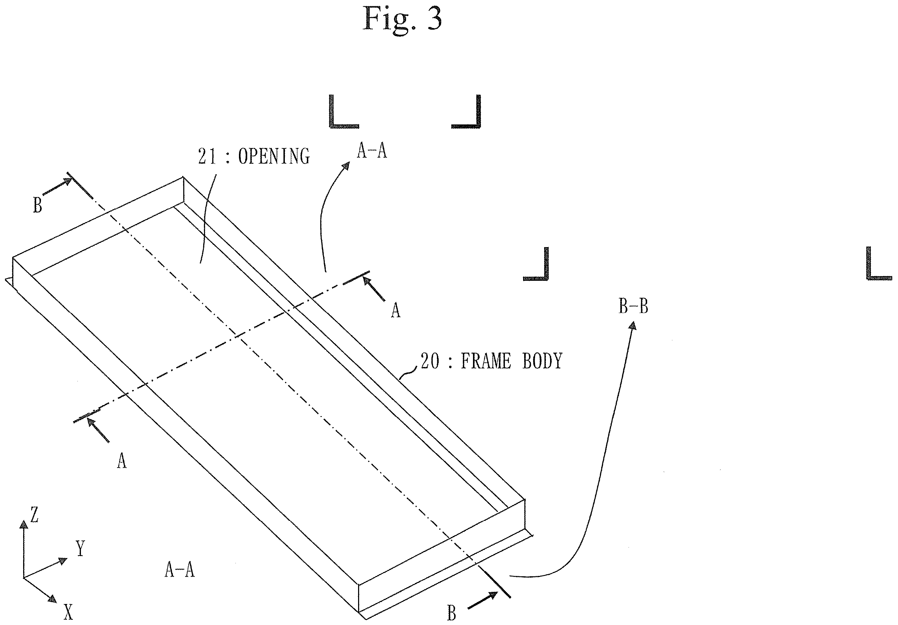

Fig. 3 is a diagram schematically showing a structure of the frame body 20. The frame body 20 defines a frame shape. The frame body 20 is made of a beam having a simple cross-sectional shape in the interest of mass productivity. For the beam, metal or carbon fiber can be used as material. The frame body 20 is structured in a polygonal shape, for example, by combining multiple beams by mechanical fastening or bonding. The frame body 20 shown in Fig. 3 is formed in a rectangular frame shape from multiple beams having L-shaped cross sections. The L-shaped cross section is an example and the shape of the cross section is not limited. Fig. 3 indicates an A-A section and a B-B section. The frame shape of the frame body 20 forms an opening 21.

### <Film 30>

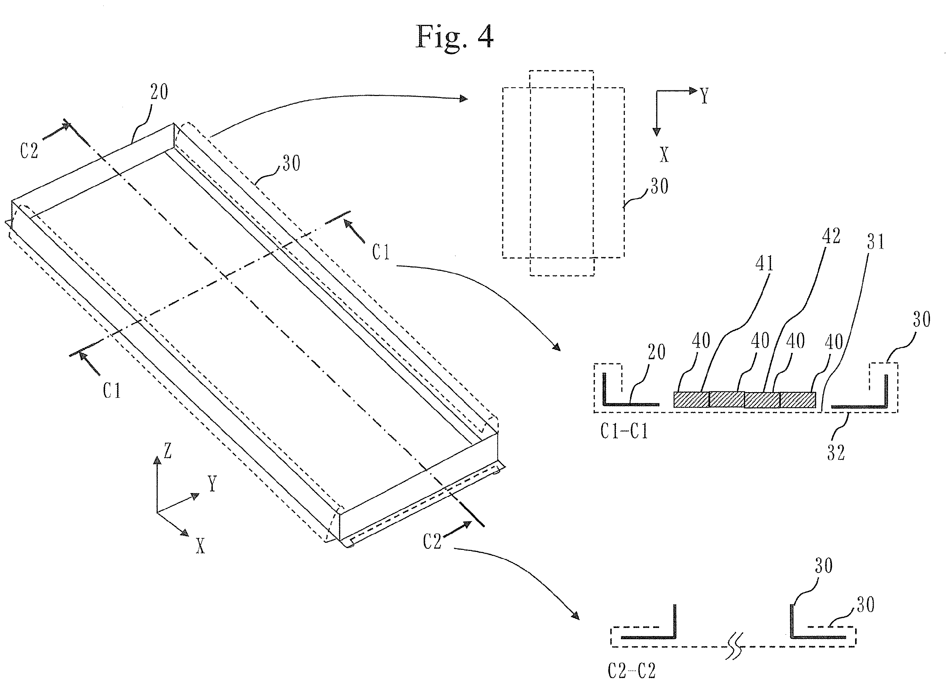

Fig. 4 shows the film 30 attached to the frame body 20. In Fig. 4, the solar cell 40 is not illustrated. Fig. 4 shows a C1-C1 section, a C2-C2 section, and the film 30 in deployed position. The C1-C1 section and the C2-C2 section correspond to the A-A section and the B-B section in Fig. 3. The film 30 is formed of polymeric material. In Fig. 4, the film 30 is shown in broken line. In the drawings described below, the film 30 may be shown in broken line. The film 30 is attached to the frame body 20. The film 30 appears as a mounting surface 31 in the opening 21 that is formed by the frame shape defined by the frame body 20. As shown in Fig. 1, multiple solar cells 40 are mounted on the mounting surface 31 of the film 30.

### <Solar cell 40>

The multiple solar cells 40 are mounted on the mounting surface 31 of the film 30. As depicted in Fig. 1, the multiple solar cells 40 disposed on the film 30 of a frame body unit 10 form an electric circuit 43. Each one of the multiple trapezoid shapes depicted in the frame body unit 10 in Fig. 1 is a solar cell 40. The electric circuit 43 outputs solar-generated electric power from an output line 44. The output line 44 will be discussed later.

### <Issues of conventional rigid panel type>

- Involving a long work period and high cost because of the multiple manufacturing steps of a rigid panel.
- Not suited for mass production because solar cells need to be mounted for each panel basis and cannot be manufactured continuously.
- Having a limitation in reducing the thickness in order to ensure rigidity strength.
- The thickness of a rigid panel is a bottleneck with a solar array of rigid panel type, due to the necessity to reduce the panel size per panel for space saving in mounting on a satellite or a space system. Because of the thickness of a rigid panel, if the light receiving area is sought, it would lead to a too large stowage height in the stacking direction of the panels when panels are folded and stowed like a folding screen.

### <Effects of basic configuration>

- The structure described above achieves characteristics that are advantageous for low cost, space saving, and mass productivity, compared to the widely used conventional rigid panel type.
- With the structure of the deployable solar array 1, the frame body 20 can be structured by combining mass-produceable beams made of metal or carbon fiber and having the same simple cross-sectional shape by mechanical fastening. Thus, the rigidity of the beams is easy to ensure and the thickness of the frame body unit 10 equivalent to one panel can be reduced. That is to say, the thickness of the frame body 20 can be reduced.
- In the deployable solar array 1, multiple solar cells 40 are mounted on the film 30. This configuration allows for continuous manufacture compared to the rigid panel type, for which productivity is separated for each panel.

As a result, low cost and mass productivity can be ensured.

### <2. Interval between light receiving surfaces>

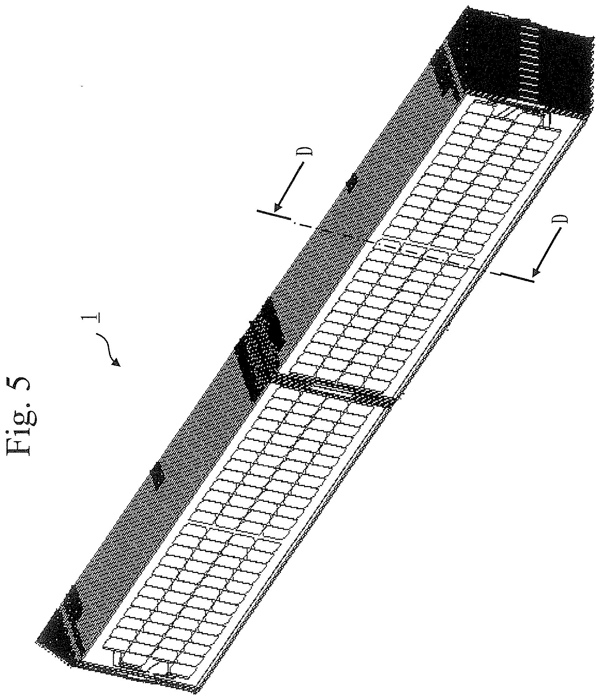

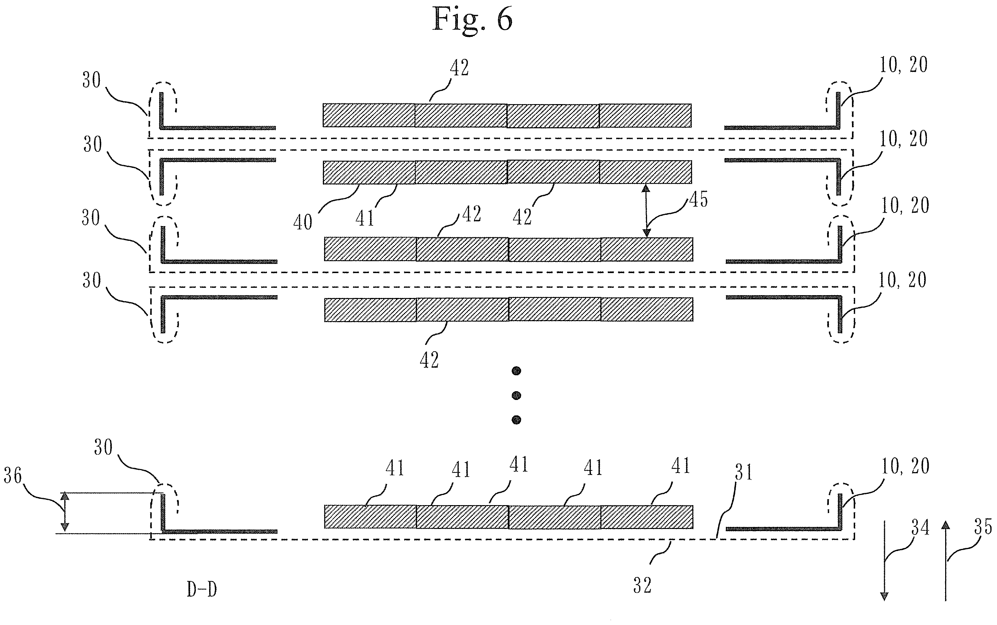

Fig. 5 shows the deployable solar array 1 when stowed. Fig. 6 shows a D-D section in Fig. 5.

Referring to the lowermost frame body unit 10 in Fig. 6, the mounting surface 31 of the film 30 is located below the frame body 20 in a downward direction 34, which is the direction from the mounting surface 31 toward a backside 32 of the mounting surface 31. Each solar cell 40 of the multiple solar cells 40 has a backside of a light receiving surface 41 thereof attached to the mounting surface 31. As shown in Fig. 6, taking the second one frame body unit 10 from the top and the third other frame body unit 10 from the top as an example, their entire light receiving surfaces 42 formed by the light receiving surfaces 41 of the solar cells 40 face each other during stowage. This configuration allows the multiple solar cells 40 to be arranged on the side of the downward direction 34, like the lowermost frame body unit 10 in Fig. 6. Thus, when stowed as in Fig. 6, the entire light receiving surfaces 42 face one another, which has the effect below. Note that since the direction from the mounting surface 31 toward the backside 32 of the mounting surface 31 represents the downward direction 34, the downward direction 34 and the opposite direction, discussed later, are reverse for the second and fourth frame body units 10 from the top in Fig. 6, for example, with respect to the lowermost frame body unit 10 in Fig. 6.

### <Effect of ensuring light receiving surface interval>

The light receiving surface 41 of the solar cell 40 is covered with cover glass in order to protect it against radiation degradation in a space environment. Thus, the cover glass covering the light receiving surface 41 is subject to a mechanical damage risk associated with a contact with other components in a vibration environment during launch of a rocket. However, since the mounting surface 31 of the film 30 is located below the frame body 20 in the downward direction 34, which is the direction from the mounting surface 31 toward the backside 32 of the mounting surface 31, the intervals between the opposing entire light receiving surfaces 42 is allowed to be large to a certain degree. Thus, contact between the entire light receiving surfaces 42 and damage to the entire light receiving surfaces 42 can be prevented by ensuring a spatial distance between the entire light receiving surfaces 42 without a component or material to directly protect the light receiving surfaces. Hence, there are advantages in terms of cost and mass productivity.

Furthermore, in Fig. 6, when the deployable solar array 1 is stowed, a light receiving surface interval 45 between the entire light receiving surfaces 42 is sized to be twice or more the thickness of the frame body 20. Here, the thickness of the frame body 20 refers to a maximal width 36 in the downward direction 34 and an opposite direction 35 of the downward direction 34, when described for the lowermost frame body unit 10 in Fig. 6. As shown in Fig. 6, the reverse sides of the light receiving surfaces 41 of the solar cells 40 can be placed back to back with their respective films 30 in between, and the interval between the entire light receiving surfaces 42 can be secured such that it is twice or more the thickness of the frame body 20. This can maintain the intervals between the entire light receiving surfaces 42 of the neighboring frame body units 10 when the deployable solar array 1 is stowed. Also in terms of this, a similar effect to that of the above-described configuration, "the mounting surface 31 of the film 30 is located below the frame body 20 in the downward direction 34", is provided.

### <3. Thermal deformation absorption structure 60 for film with respect to frame body>

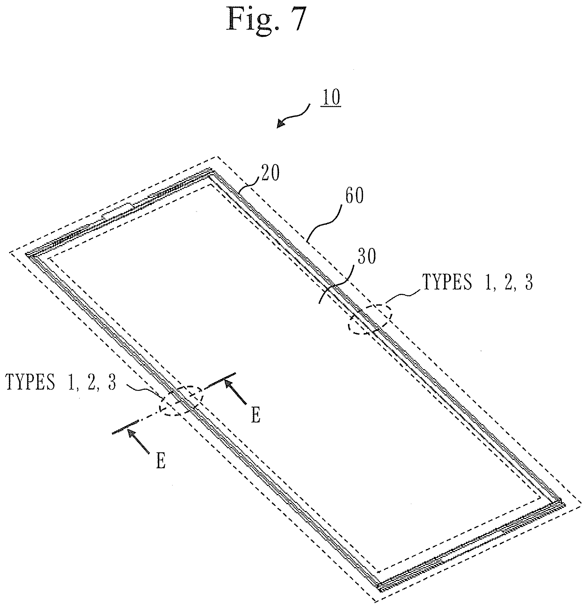

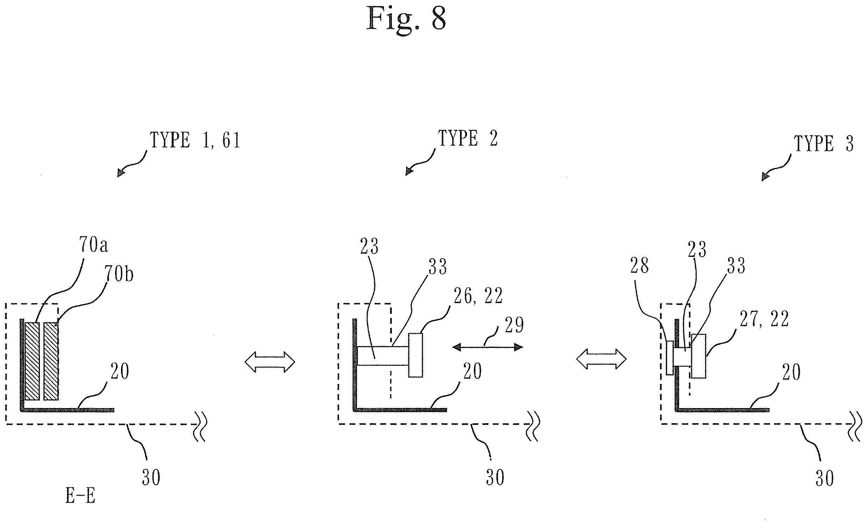

Referring to Figs. 7 and 8, a thermal deformation absorption structure 60 for attaching the film 30 to the frame body 20 is described.

Fig. 7 shows the frame body unit 10, where the solar cells 40 are not illustrated.

Fig. 8 shows three types in the E-E section that are included in the thermal deformation absorption structure 60. As shown in Fig. 7, the deployable solar array 1 includes the thermal deformation absorption structure 60 to relieve thermal deformation of the film 30 with respect to the frame body 20 as a structure for attaching the film 30 and the frame body 20. The thermal deformation absorption structure 60 is a structure that attaches the film 30 to the frame body 20 for the entire periphery of the frame body 20. Fig. 8 shows that one of the three types, type 1 to type 3, is used in the E-E section. The E-E section is a cross section employed for illustration, and the three types, type 1 to type 3, are disposed at multiple points throughout the periphery of the frame body 20. The thermal deformation absorption structure 60 includes a hook-and-loop fastener structure 61 of type 1. The hook-and-loop fastener structure 61 attaches the film 30 to the frame body 20 by sticking a film hook-and-loop fastener 70b, which is a hook-and-loop fastener attached to the film 30, to a frame body hook-and-loop fastener 70a, which is a hook-and-loop fastener attached to the frame body 20.

Type 1 in Fig. 8 shows the hook-and-loop fastener structure 61. The thermal deformation absorption structure 60 mainly uses the hook-and-loop fastener structure 61, and uses the mechanical fastening approach shown in Fig. 8 as types 2 and 3 together as an aid in attachment. Both type 2 and type 3 may be used with type 1 or either one of them may be used with type 1. Types 2 and 3 are structured such that a stem 23 of a shaft 22, which has the stem 23 and is attached to the frame body 20, passes through a through hole 33 formed in the film 30. Type 2 is structured such that the stem 23 of a pin 26 as the shaft 22, which has the stem 23 and is attached to the frame body 20, passes through the through hole 33 formed in the film 30.

Type 3 is configured to use a set of a screw 27 and a nut 28 or a rivet. Type 3 in Fig. 8 shows a set of the screw 27 and the nut 28. When the set of the screw 27 and the nut 28 is used as type 3, the structure is such that the stem 23 of the screw 27 as the shaft 22, which has the stem 23 and is attached to the frame body 20, passes through the through hole 33 formed in the film 30, as shown in Fig. 8. The screw 27 is attached to the frame body 20 with the nut 28. When a rivet is used as type 3, the structure is such that the stem of the rivet as the shaft, which has the stem and is attached to the frame body, passes through the through hole 33 formed in the film 30, in a similar manner to the screw 27. For the mechanical fastening as type 3, the set of the screw 27 and the nut 28 may be employed, a rivet may be employed, or both the set of the screw 27 and the nut 28 and a rivet may be employed.

Type 2 is loose attachment that allows the film 30 to move in an axis direction 29 in which the stem 23 extends. In contrast, type 3 is tight attachment that prevents the film 30 from moving in the axis direction 29.

### <Effects of thermal deformation absorption structure 60>

As described above, the means of attaching the film 30 to the frame body 20 is the thermal deformation absorption structure 60. The thermal deformation absorption structure 60 mainly uses the hook-and-loop fastener structure 61 shown as type 1, and uses mechanical fastening that employs the pin 26 shown as type 2, and the set of the screw 27 and the nut or a rivet shown as type 3 in combination as an aid. Any of combined use of type 1 and type 2, combined use of type 1 and type 3, and combined use of type 1, type 2, and type 3 is possible.

The hook-and-loop fastener structure 61 of type 1 as the primary means of fixation has flexibility in attachment of the frame body 20 and the film 30. The hook-and-loop fastener structure 61 can relieve thermal deformation of the film 30 with respect to the frame body 20 which is caused by linear expansion difference between components in a heat cycle environment in space. Although the thermal deformation absorption structure 60 uses mechanical fastening, such as type 2 and type 3, in combination, it is configured to allow relative movement of the film 30 to the frame body 20 in response to thermal deformation.

The configuration described above can eliminate the necessity for a tension adjustment mechanism, which is essential for the conventional flexible types. The frame body unit 10 is thus simple in structure, so that lower cost and mass productivity can be ensured.

### <4. Fixing film 30 by means of projection 24 >

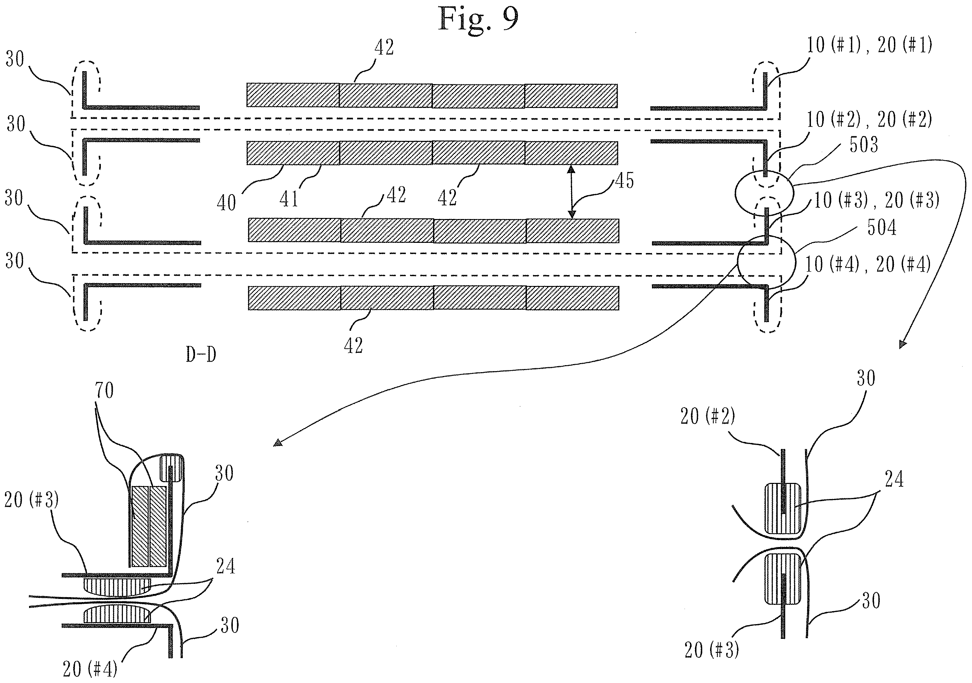

Referring to Fig. 9, a configuration for nipping and fixing the film 30 with a projection 24 provided on the frame body 20 when the deployable solar array 1 is stowed is described. Fig. 9 shows the D-D section of Fig. 5.

As shown in Fig. 9, the frame body 20 has the projection 24. With the multiple frame body units 10 being stowed in layers, the projection 24 of the frame body 20 of one frame body unit 10 nips and fixes the film 30 of the one frame body unit 10 and the film 30 of the other frame body unit 10 with the projection 24 of the frame body 20 of the other frame body unit 10.

This is described in more detail below. In Fig. 9, the frame body units 10 are denoted as frame body units #1, #2, #3, #4 from the top in order. The frame bodies 20 of the frame body units #1, #2, #3, #4 are denoted as frame bodies #1, #2, #3, #4, respectively. Consider the frame body #2 and the frame body #3, and the frame body #3 and the frame body #4. For the frame body #2 and the frame body #3, their entire light receiving surfaces 42 face each other. In an area 503, the frame body #2 has the projection 24 at an end in the stacking direction, while the frame body #3 has the projection 24 at an end in the stacking direction on the side facing the frame body #2.

The film 30 of the frame body unit #2 and the film 30 of the frame body unit #3 are nipped and fixed by the projection 24 of the frame body #2 and the projection 24 of the frame body #3. For the frame body #3 and the frame body #4, the films on which the backsides of the entire light receiving surfaces 42 are positioned face each other.

In an area 504, the projection 24 of the frame body #3 is positioned between the frame body #3 and the film 30, and the projection 24 of the frame body #4 is positioned between the frame body #4 and the film 30. The film 30 of the frame body unit #3 and the film 30 of the frame body unit #4 are nipped and fixed by the projection 24 of the frame body #3 and the projection 24 of the frame body #4.

### <Effect of fixation of film 30 with projection 24 >

When the deployable solar array 1 is deployed, it is configured to loosely fix the frame bodies and films in order to relieve thermal deformation due to heat cycle, as described in Fig. 8. Furthermore, when the deployable solar array 1 is stowed, that is, when it is launched on a rocket, the films are rigidly fixed to the frame bodies 20, which serve as structures, by way of the projections 24 provided on the frame bodies 20.

The film 30 thus can withstand a launch vibration environment. Accordingly, for the film 30, a simple structure that can withstand vibration during a launch and a simple structure that can withstand the heat cycle during deployment described in Fig. 8 can be achieved.

### <5. Mechanical contact>

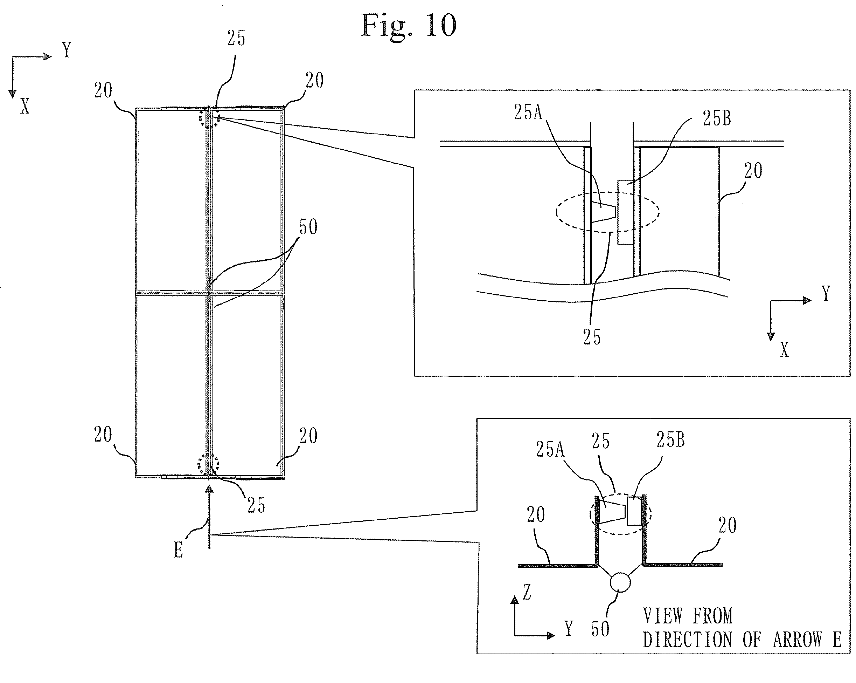

Fig. 10 shows a mechanical contact 25. One frame body unit 10 and the other frame body unit 10 have the mechanical contact 25 that transmits a load to each other during deployment.

This is described in more detail below. As shown in Fig. 10, the mechanical contact 25 that transmits a load between the neighboring frame bodies 20 to each other during deployment is provided. Fig. 10 shows the four frame body units 10 in an area 505 of Fig. 1. In Fig. 10, the solar cells 40 are not illustrated. The mechanical contact 25 is formed of a member 25A disposed on one frame body 20 and a member 25B disposed on the other frame body 20. Thanks to the mechanical contact 25, the deployed shape of the deployable solar array 1 is maintained only by the rigidity of the frame body 20. The hinge 50 and the mechanical contact 25 are also configured to be able to receive moment load by ensuring a spatial distance in X-Y plan view.

### <Effect of mechanical contact>

With a conventional flexible type solar array, each unit is not formed of a rigid body that has sufficient rigidity to constitute the entire solar array by itself. For example, each unit is made of a film alone or a thin plate. Thus, a support structure such as a mast or a storable tubular extendible member is essential for ensuring the rigidity during deployment. A support structure has disadvantages such as poor design scalability, unsuitability for mass production, and high cost and bulkiness due to the complexity of the support structure and a deployment mechanism for the support structure. However, the configuration provided with the mechanical contact 25 eliminates the necessity for a support structure and its deployment mechanism. Essentially, each frame body 20 is responsible for rigidity and a load path between the frame bodies 20 is created by the mechanical contacts 25, thus ensuring the rigidity of the entire deployable solar array 1. So, the deployable solar array 1 that is inexpensive, space saving, and advantageous for mass productivity can be achieved.

### <6. Positioning of wiring during deployment>

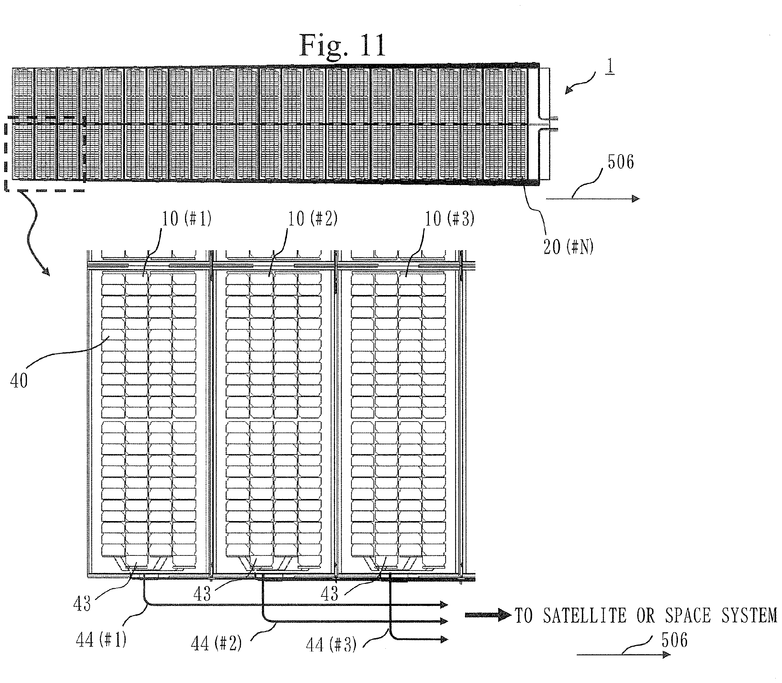

Fig. 11 shows the output lines 44 for drawing electric power from the frame body units 10. The multiple solar cells 40 form the electric circuit 43. Each frame body unit 10 includes the output line 44 connected to the electric circuit 43.

When multiple frame body units 10 are deployed, the output line 44 of each frame body unit 10 is positioned along the side surfaces of the multiple frame body units 10 in the same direction 506, which is one direction in the linear form.

This is described in more detail below. As shown in Fig. 11, the output line 44 connected to each electric circuit 43 formed by multiple solar cells 40 is drawn from a side of the frame body 20 and routed along the side surfaces of the frame bodies 20. The output line 44 out of the frame body 20 is routed toward the root of the deployable solar array 1, that is, in the same direction 506, without passing through a connector or a terminal. The three frame body units 10 in Fig. 11 are denoted as frame body units #1, #2, #3 from the left. The output lines 44 of the frame body units #1, #2, #3 are denoted as output lines #1, #2, #3, respectively. The output line #1 runs along the side surface of the frame body unit #1, output lines #1, #2 run along the side surface of the frame body unit #2, and output lines #1, #2, #3 run along the side surface of the frame body unit #3. Finally, output lines #1, #2, #3, ..., #N run along the side surface of a frame body unit #N. That is, if output lines are stacked on top of each other in the thickness direction, it would be infeasible with a flat pack that has a small thickness of the frame body 20. Thus, the deployable solar array 1 is configured such that a bundle of output lines is placed flat and the width of the bundle of output lines increases as it is closer to the root. The multiple output lines 44 running in the same direction 506 reach a satellite or a space system.

### <Effect of output line positioning>

A configuration for transmitting electric power to a satellite or a space system is conventionally structured such that connectors mounted on individual panels are connected. Hence, as the size of the solar array increases in relation to the required power, the number of components increases and also a separate wiring design is required according to the size. By contrast, the configuration of the output line 44 shown in Fig. 11 does not require wire coupling between frame body units 10 and does not require a connector for each frame body unit 10. Thus, the number of components can be decreased, the reliability of performance can be ensured, and cost can be reduced. Also, by directly drawing the output lines 44 from the frame body units toward a satellite or a space system, necessity for circuit design and wiring design according to the required power of the solar array is eliminated.

That is, the deployable solar array 1 allows flexible design of the deployable solar array 1 according to the required power by adjusting the number of frame body units 10 in relation to the required power.

Thus, the deployable solar array 1 can have a structure that is scalable in terms of design for the required power, and the work period and cost can be reduced.

### <7. Elastic body 80>

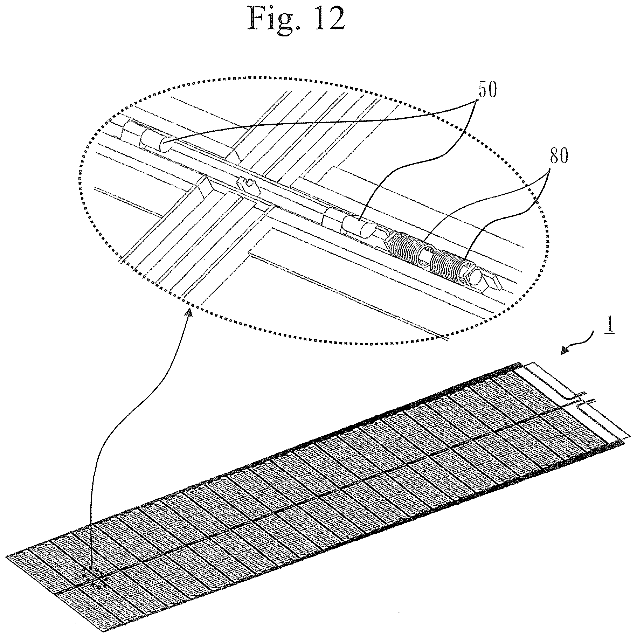

Fig. 12 shows an elastic body 80, which is disposed independently from the hinge 50, which forms a rotation shaft, and produces deployment power for the deployable solar array 1. The deployable solar array 1 has the elastic body 80 which stores elastic energy for deploying one frame body unit 10 relative to the other frame body unit 10 during stowage, between the one frame body unit 10 and the other frame body unit 10. Fig. 12 shows a coil spring as an example of the elastic body 80. The elastic body 80 stores elastic energy for causing a deployment motion from the stowed position to the deployed position upon transition from the deployed position to the stowed position shown in Fig. 2.

### <Effect of having elastic body 80>

The elastic body 80 simplifies the structure of the deployment mechanism created by the hinge 50 and the elastic body 80. Thus, cost reduction can be achieved. Furthermore, since the deployment mechanism can be created by a simple structure, that is, the combination of the hinge 50 and the elastic body 80, the mass productivity of the deployable solar array 1 can be ensured. Also, depending on the size of the solar array, separate design has been needed. In terms of this, the deployable solar array 1 can accommodate the sizing of deployment torque by adjusting the number of elastic bodies 80 that are disposed between one frame body unit 10 and the other frame body unit 10. This can provide a structure that is scalable for the solar array size. Hence, separate designs, like those for conventional solar array units, are no longer necessary, and the work period and cost can be reduced.

### <8. Deployment delay mechanism 90>

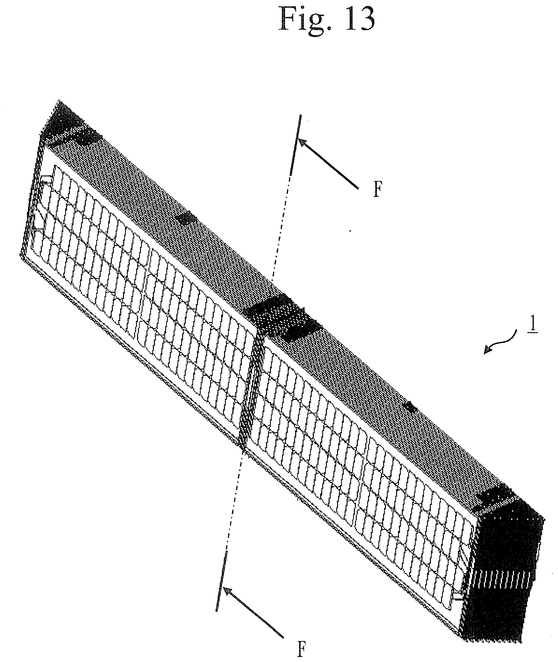

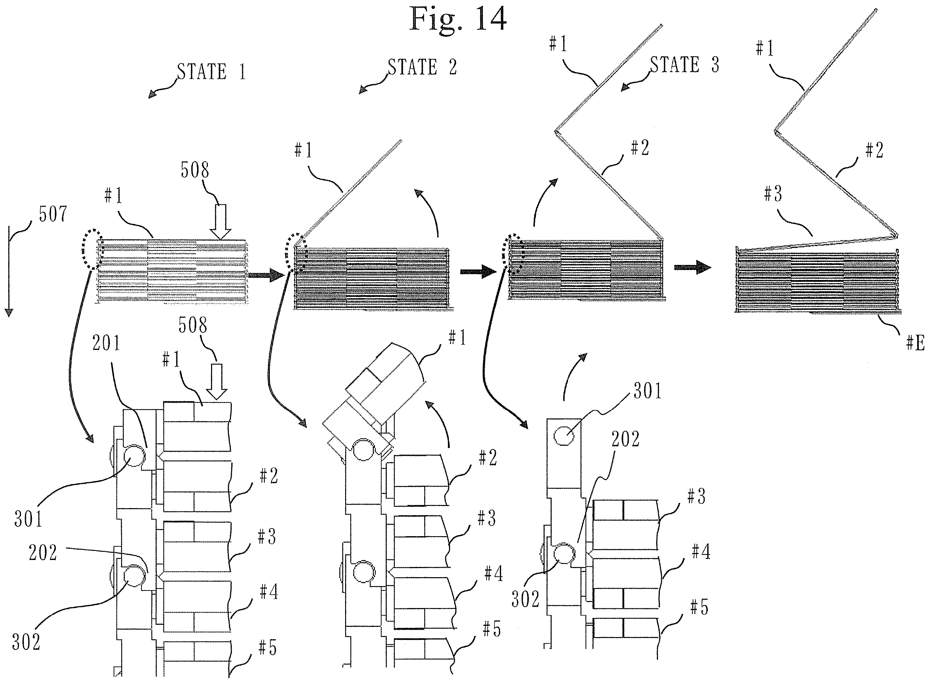

Figs. 13 and 14 illustrate a deployment delay mechanism 90.

Fig. 13 shows an F-F section in which the deployment delay mechanism 90 appears. Fig. 14 shows deployment by the deployment delay mechanism 90.

As shown in Fig. 14, the deployable solar array 1 includes the deployment delay mechanism 90 that, for a start frame body unit 10 as the frame body unit #1 that is located at one end of the layers during stowage, through to an end frame body unit #E located at the other end of the layers during stowage, causes a deployment motion to begin from the start frame body unit #1 toward the end frame body unit #E sequentially. Referring to Fig. 14, delayed deployment motion by the deployment delay mechanism 90 is described.

The deployment delay mechanism 90 is created by multiple hinges 50, multiple elastic bodies 80, multiple cams, and multiple rollers. The frame body units 10 are denoted like frame body unit #1. In Fig. 14, multiple frame body units 10 from the frame body unit #1 to the frame body unit #E are folded in layers. The multiple frame body units 10 from the frame body unit #1 to the frame body unit #E are folded in layers in a stacking direction 507.
(1) In state 1, the frame body unit #1 tends to rotate around the hinge 50 and open due to the elastic body 80 disposed between itself and the frame body unit #2. However, the frame body unit #1 does not open because the frame body unit #1 is held down by a pressing force 508 in the stacking direction 507. Under this condition, the frame body unit #2 and the subsequent frame body units do not open.
(2) The pressing force 508 is removed. The frame body unit #1 starts to open with the elastic force of the elastic body 80. The frame body unit #2 tends to open with the elastic force of the opposite elastic body 80. However, a cam 201 and a roller 301 are engaged with each other and a cam 202 and a roller 302 are also engaged with each other. When the frame body unit #2 pushes against the frame body unit #1, this force is received by the cam 201 and the roller 301, so that the frame body unit #1 does not move upward. The frame body unit #1 continues to rotate.
(3) In state 2, the rotation of the frame body unit #1 disengages the cam 201 and the roller 301, and the cam 201 and the roller 301 cannot receive the force with which the frame body unit #2 pushes against the frame body unit #1. Thus, the frame body unit #2 starts rotation with the elastic force of the opposite elastic body 80. The state transitions from state 2 to state 3. Although Fig. 14 shows the deployment delay mechanism 90 on the left side in a layer-folded state, the same deployment delay mechanism 90 is disposed on the right side as well. Accordingly, the frame body units 10 will sequentially deploy: the frame body unit #1 opens, then the frame body unit #2 opens, then the frame body unit #3 opens, and so on.

### <Effect of deployment delay mechanism 90>

As shown in Fig. 14, the deployable solar array 1 has the deployment delay mechanism 90. The deployment delay mechanism 90 is created by multiple hinges 50, multiple elastic bodies 80, multiple cams, and multiple rollers in their entities. A conventional solar array typically contains a synchronization mechanism for synchronizing the overall motion. So, it needs adjustment during assembly and requires separate designs for different solar array sizes. The deployment delay mechanism 90 does not require such separate designs or adjustment after assembly. Thus, a structure that is scalable for the solar array size can be achieved and the work period and cost can be reduced.

### Reference Signs List

1: deployable solar array; 10: frame body unit; 20: frame body; 21: opening; 22: shaft; 23: stem; 24: projection; 25: mechanical contact; 26: pin; 27: screw; 28: nut; 29: axis direction; 30: film; 31: mounting surface; 32: backside; 33: through hole; 34: downward direction; 35: opposite direction; 40: solar cell; 41: light receiving surface; 42: entire light receiving surface; 43: electric circuit; 44: output line; 45: light receiving surface interval; 50: hinge; 60: thermal deformation absorption structure; 61: hook-and-loop fastener structure; 70a: frame body hook-and-loop fastener; 70b: film hook-and-loop fastener; 80: elastic body; 90: deployment delay mechanism; 101: first row; 102: second row; 103: straight line direction; 201, 202: cam; 301, 302: roller; 501, 502, 503, 504, 505: area; 506: same direction; 507: stacking direction; 508: pressing force

## Claims

1. A deployable solar array comprising:
a plurality of frame body units, wherein
each frame body unit of the plurality of frame body units includes
a frame body defining a frame shape, and
a film that is attached to the frame body and appears as a mounting surface in an opening that is formed by the frame shape defined by the frame body, with a plurality of solar cells mounted on the mounting surface.

2. The deployable solar array according to claim 1, wherein
the frame body units align in a linear form upon deployment,
one frame body unit is coupled by a hinge to another frame body unit that neighbors the one frame body unit during deployment,
the one frame body unit overlies the other frame body unit so as to cover the other frame body unit by turning around the hinge, and
the plurality of frame body units can be stowed in layers by the one frame body unit covering the other frame body unit.

3. The deployable solar array according to claim 2, wherein
the mounting surface of the film is located below the frame body in a downward direction, the downward direction being a direction from the mounting surface toward a backside of the mounting surface,
each solar cell of the plurality of solar cells has a backside of a light receiving surface thereof attached to the mounting surface, and
for the one frame body unit and the other frame body unit, their respective entire light receiving surfaces face each other during stowage, the entire light receiving surfaces each being formed by the light receiving surfaces of the solar cells.

4. The deployable solar array according to claim 2 or 3, comprising:
a thermal deformation absorption structure to relieve thermal deformation of the film with respect to the frame body as a structure for attaching the film and the frame body.

5. The deployable solar array according to claim 4, wherein
the thermal deformation absorption structure includes a hook-and-loop fastener structure to attach the film to the frame body by sticking a film hook-and-loop fastener to a frame body hook-and-loop fastener, the film hook-and-loop fastener being a hook-and-loop fastener attached to the film, and the frame body hook-and-loop fastener being a hook-and-loop fastener attached to the frame body.

6. The deployable solar array according to any one of claims 2 to 5, wherein
the frame body has a projection, and
with the plurality of frame body units being stowed in layers, the projection of the frame body of the one frame body unit nips and fixes the film of the one frame body unit and the film of the other frame body unit with the projection of the frame body of the other frame body unit.

7. The deployable solar array according to any one of claims 2 to 6, wherein
the one frame body unit and the other frame body unit have a mechanical contact that transmits a load to each other during deployment.

8. The deployable solar array according to any one of claims 2 to 7, wherein
the plurality of solar cells form an electric circuit, and
each of the frame body units further includes an output line connected to the electric circuit, and
when the plurality of frame body units are deployed, the output line of each frame body unit is positioned along side surfaces of the plurality of frame body units in the same direction, the same direction being one direction in the linear form.

9. The deployable solar array according to any one of claims 2 to 8, further comprising:
an elastic body that stores elastic energy for deploying the one frame body unit relative to the other frame body unit during stowage, between the one frame body unit and the other frame body unit.

10. The deployable solar array according to any one of claims 2 to 9, further comprising:
a deployment delay mechanism to, for a start frame body unit as the frame body unit that is located at one end of the layers during stowage, through to an end frame body unit located at another end of the layers during stowage, cause a deployment motion to begin from the start frame body unit toward the end frame body unit sequentially.
